# EUROPÄISCHE PATENTSCHRIFT

(11) **EP 4 011 478 B1**
(45) Veröffentlichungstag und Bekanntmachung des Hinweises auf die Patenterteilung: **19.03.2025**
(21) Anmeldenummer: 21208981.7
(22) Anmeldetag: 18.11.2021
(51) Int. Cl.: B01D 39/16, A41D 13/11, A62B 23/02, B32B 5/26, D04H 3/14

(54) **VLIESSTOFFMATERIAL ZUR HERSTELLUNG EINER ATEMSCHUTZMASKE SOWIE ATEMSCHUTZMASKE**
RESPIRATORY MASK AND NON-WOVEN MATERIAL FOR MAKING A RESPIRATORY MASK
MATIÈRE NON TISSÉE DESTINÉE À LA FABRICATION D'UN MASQUE RESPIRATOIRE, AINSI QUE MASQUE RESPIRATOIRE

(30) Priorität: 08.12.2020 DE 102020132707
(43) Veröffentlichungstag der Anmeldung: 15.06.2022
(73) Patentinhaber: Sandler AG, 95126 Schwarzenbach/Saale (DE); Zettl BHC GmbH, 84187 Weng (DE)
(72) Erfinder: Hornfeck, Ulrich, 95119 Naila (DE); Popp, Lothar, 95213 Münchberg (DE); Zettl, Lukas, 84187 Weng (DE); Zettl, Matthias, 84187 Weng (DE)
(74) Vertreter: Grünecker Patent- und Rechtsanwälte PartG mbB

(56) Entgegenhaltungen:
- EP-A1- 0 645 487
- WO-A1-2016/069342
- WO-A1-2017/075407
- WO-A1-98/58558
- JP-A- 2010 242 255
- US-A1- 2008 271 739

## Beschreibung

Die vorliegende Erfindung betrifft ein Vliesstoffmaterial zur Herstellung einer Atemschutzmaske nach dem Oberbegriff des unabhängigen Anspruchs 1 sowie eine Atemschutzmaske hergestellt aus einem entsprechenden Vliesstoffmaterial.

Gängige Atemschutzmasken werden zumeist aus einem Vliesstoffmaterial hergestellt, das mehrlagig aufgebaut ist und eine dem Gesicht des Benutzers der Atemschutzmaske abgewandte Außenlage, eine dem Gesicht des Benutzers der Atemschutzmaske zugewandte Innenlage, sowie ein zwischen Außenlage und Innenlage angeordnetes Filtervlies zur Filterung der Atemluft aufweisen kann. Die Innenlage kann dabei auch eine Lage des Filtervlieses sein.

Am Markt befindliche Atemschutzmasken aus dem oben beschriebenen Material werden überwiegend als Hygieneschutzmasken zur Vermeidung bzw. Verringerung eines Tröpfcheninfektionsrisikos verwendet. Sie bieten in der Regel jedoch nur denjenigen Personen Schutz, die sich im Umfeld des Trägers der Atemschutzmaske aufhalten. Der Träger selbst ist aufgrund von Leckage-Luftströmen nur unzureichend vor einer Tröpfcheninfektion geschützt.Die WO 98/058558 A1 zeigt eine Atemschutzmaske mit einer becherförmigen formstabilen Außenschale, auf deren konkaver Innenseite eine Schicht aus einem Filtermaterial und eine Innenlage aus einer weichen Vliesstoffschicht vorgesehen ist. Die EP 0 645 487 A1 beschreibt ein Verfahren zur Herstellung eines Trägervlieses für ein Filtermaterial, wobei die Glätte einer Bahn aus nicht gewebten Polymerfasern in einem Kalander verbessert wird. Die WO 2017/075407 A1 betrifft ein durch Kalandern hergestelltes gattungsgemäßes Vliesstoffmaterial mit einem innenliegenden Filtermaterial, wobei ein nicht-gewebtes Stapelfaservlies durch Kalandern zu einem miteinander verbundenen Faservlies komprimiert wird.

Im Zuge der anhaltenden COVID-19-Pandemie besteht ein Bedarf an Atemschutzmasken, die günstig hergestellt werden können und sowohl für den Träger selbst als auch für die Umwelt einen sicheren Schutz vor einer Tröpfcheninfektion bieten. Aufgabe der vorliegenden Erfindung ist es, ein Vliesstoffmaterial zur Herstellung einer Atemschutzmaske anzugeben, welches diese Anforderungen erfüllt. Ferner ist es Aufgabe der vorliegenden Erfindung, ein Vliesstoffmaterial für den genannten Einsatzzweck bereitzustellen, das vom Träger der Atemschutzmaske hinsichtlich Tragekomfort und Haptik als angenehm empfunden wird.

Die Aufgabe wird gelöst durch die Merkmale des unabhängigen Anspruchs 1. Demnach liegt bei einem Vliesstoffmaterial gemäß dem Oberbegriff des unabhängigen Anspruchs 1 dann eine erfindungsgemäße Lösung der Aufgabe vor, wenn die Innenlage ein mittels Thermokalander beidseitig vollflächig glatt kalandriertes, faserbasiertes Thermobondvlies aus Polypropylenfasern ist.

Durch die Innenlage des erfindungsgemäßen Vliesstoffmaterials kann im Vergleich zu herkömmlichen Materialien eine wesentlich höhere Formstabilität der Atemschutzmaske erreicht werden. Die erhöhte Formstabilität wirkt sich vor allem positiv auf die nach DIN EN 149 vorgegebenen Ein- und Ausatemwiderstände aus. Die erfindungsgemäße Innenlage weist ferner eine sehr niedrige Dehnung auf. Diese liegt lediglich bei etwa 5-20%, wodurch auch im Gebrauch die Passform und der korrekte Sitz der Atemschutzmaske sichergestellt werden können. Durch die Stabilität der Innenlage wird zudem ein hoher Tragekomfort erreicht. Denn die erhöhte Stabilität der Innenlage verhindert größtenteils, dass sich das Vliesstoffmaterial beim Einatmen kurzzeitig auch in mundnahen Bereichen großflächig an das Gesicht des Benutzers anlegt, was bei herkömmlichen Atemschutzmasken mitunter der Fall ist. Durch die glatt-kalandrierte Oberfläche der Innenlage wird das Material selbst bei Berührung als angenehm empfunden. Dies trifft insbesondere auf Bartträger zu. Das erfindungsgemäße Vliesstoffmaterial lässt sich zudem günstig herstellen.

Vorteilhafte Ausgestaltungen der vorliegenden Erfindung sind Gegenstand der Unteransprüche.

Gemäß einer bevorzugten Ausführungsform der vorliegenden Erfindung ist vorgesehen, dass die Innenlage ein Flächengewicht von 15-20 g/qm aufweist. Weiter vorzugsweise weist die Innenlage ein Flächengewicht von 16-18 g/qm auf. Als besonders bevorzugt hat sich ein Flächengewicht von 17 g/qm herausgestellt. Dadurch wird ein optimaler Kompromiss zwischen Formstabilität und einem angenehmen Tragegefühl bzw. einem geringen Atemwiederstand erreicht.

Gemäß einer weiteren bevorzugten Ausführungsform der vorliegenden Erfindung ist vorgesehen, dass die Innenlage aus Stapelfasern besteht, deren Fasertiter im Bereich zwischen 2 und 5 dtex liegt. Auch diese Ausführungsform dient dazu, eine möglichst hohe Formstabilität bei einem angenehmen Tragegefühl zu erreichen.

Gemäß einer weiteren bevorzugten Ausführungsform der vorliegenden Erfindung ist vorgesehen, dass das Filtervlies eine der Außenlage zugewandte erste Meltblownfilterlage, eine zweite Meltblownfilterlage, sowie ein der Innenlage zugewandtes Abstandsvlies aufweist, wobei das Abstandsvlies ein kalandriertes, faserbasiertes Thermobondvlies aus Polypropylenfasern und Polyesterfasern ist, und wobei die Meltblownfilterlagen aus Polypropylen-Feinstfasern mit einem Faserdurchmesser zwischen 0,6 und 2,5 Mikrometer bestehen.

Die Meltblownfilterlagen sind elektrostatisch aufgeladen und dienen als Feinfilter. Die Feinstfasern der Meltblownfilterlagen sind extrem dünn. Der angegebene Faserdurchmesser entspricht einem Fasertiter von etwa 0,03 bis 0,28 dtex. Das Abstandsvlies trägt zur Abscheidung, insbesondere von Feuchtigkeit, bei. Durch das Zusammenspiel der beiden Meltblownfilterlagen mit dem Abstandsvlies wird eine hohe Filterleistung bei gleichzeitig geringem Atemwiderstand erreicht.

Als weiter vorteilhaft hat sich herausgestellt, wenn das Abstandsvlies ein Flächengewicht von 40-60 g/qm, vorzugsweise von 50 g/qm, aufweist und zu 40-60 Gewichtsprozent aus Polypropylen-Stapelfasern mit einem Fasertiter im Bereich zwischen 2 und 5 dtex sowie zu 40-60 Gewichtsprozent aus Polyesterstapelfasern mit einem Fasertiter im Bereich zwischen 4 und 8 dtex besteht. Bei den Polyesterstapelfasern handelt es sich vorzugsweise um Stapelfasern aus Polyethylenterephthalat. Das Abstandsvlies wird mittels Thermokalander verfestigt, wobei die Verfestigung im Kalander nach einem wiederkehrenden Muster lediglich punktuell in Form von Punkten, Rauten, Ovalen oder Ähnlichem erfolgt. Die Pressfläche im Thermokalander beträgt vorzugsweise etwa 9% bis 14%. Ganz besonders bevorzugt wird das Abstandsvlies im Thermokalander gemäß einem Rautenmuster punktuell verfestigt, wodurch sich eine relativ voluminöse Noppenstruktur ergibt. Dadurch kann das Abstandsvlies die Funktion eines Abstandhalters zwischen Meltblownfilterlage und Innenlage optimal erfüllen.

Gemäß einer weiteren bevorzugten Ausführungsform der vorliegenden Erfindung weisen die Meltblownfilterlagen jeweils ein Flächengewicht von 22-28 g/qm auf. Dadurch wird ein optimaler Kompromiss zwischen hoher Filterleistung und geringem Atemwiderstand erreicht.

Gemäß einer weiteren besonders bevorzugten Ausführungsform der vorliegenden Erfindung weist die Außenlage eine Luftdurchlässigkeit von 2000 - 4500 l/m²/s auf, wobei die Meltblownfilterlagen jeweils eine Luftdurchlässigkeit von 350 - 450 l/m²/s aufweisen, wobei das Abstandsvlies eine Luftdurchlässigkeit von 3000 - 4800 l/m²/s aufweist, und wobei die Innenlage eine Luftdurchlässigkeit von zumindest 3500 l/m²/s aufweist. Sämtliche vorgenannten Luftdurchlässigkeiten sind dabei nach WSP 70.1 bei einem Differenzdruck von 200 Pascal angegeben.

Gemäß einer weiteren bevorzugten Ausführungsform der vorliegenden Erfindung ist vorgesehen, dass die Außenlage ein mittels Thermokalander punktuell kalandriertes Polypropylen-Spinnvlies mit einem Flächengewicht von 30-50 g/qm ist. Vorzugsweise beträgt das Flächengewicht dabei 40 g/qm. Wie beim Abstandsvlies erfolgt auch die Verfestigung der Außenlage im Kalander lediglich punktuell nach einem wiederkehrenden Muster in Form von Punkten, Rauten, Ovalen oder Ähnlichem. Die Pressfläche im Thermokalander beträgt hier vorzugsweise etwa 22% bis 30% der Gesamtfläche. Der Fasertiter der Polypropylenfasern der Außenlage beträgt vorzugsweise 5-12 dtex.

Die vorliegende Erfindung stellt ferner eine Atemschutzmaske bereit, die aus einem erfindungsgemäßen Vliesstoffmaterial hergestellt ist. Die einzelnen Lagen des erfindungsgemäßen Vliesstoffmaterials können einzeln gefertigt werden. Sie sind alle eigenstabil und können bei der Herstellung der Maske beispielsweise mittels Ultraschallschweißen miteinander verbunden werden.

Gemäß einer besonders bevorzugten Ausführungsform der vorliegenden Erfindung ist die Atemschutzmaske als Schnabelmaske ausgeführt. Dadurch können sowohl die gewünschte Formstabilität als auch die geringen gewünschten Leckage-Ströme erreicht werden.

Ein Ausführungsbeispiel der vorliegenden Erfindung wird nachfolgend anhand von Zeichnungen näher erläutert.

Es zeigen:
- Figur 1:: eine erfindungsgemäße Atemschutzmaske in einer perspektivischen Darstellung,
- Figur 2:: einen Materialzuschnitt für die erfindungsgemäße Atemschutzmaske aus Figur 1, und
- Figur 3:: den Lagenaufbau des verwendeten Vliesstoffmaterials.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

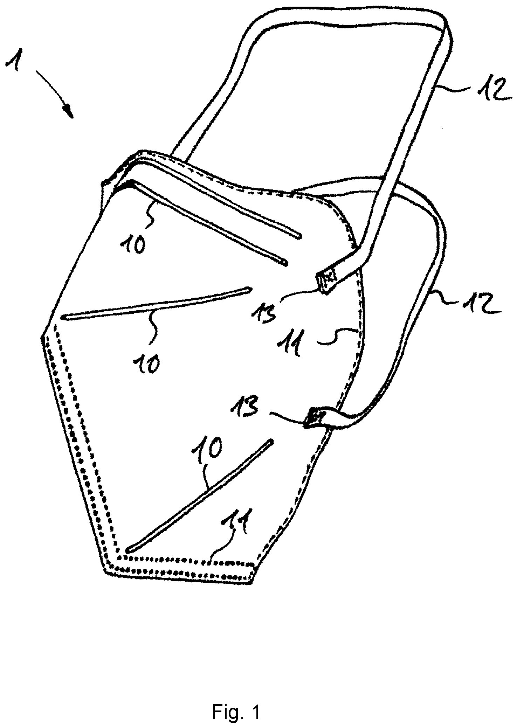

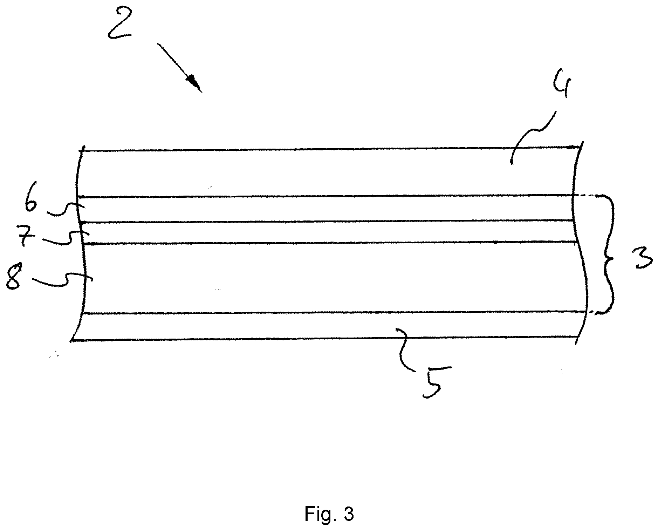

Figur 1 zeigt eine erfindungsgemäße Atemschutzmaske 1 in einer perspektivischen Darstellung. Die Atemschutzmaske 1 ist als Schnabelmaske ausgeführt und besteht aus einem erfindungsgemäßen Vliesstoffmaterial 2, dessen Aufbau weiter unten anhand von Figur 3 näher erläutert wird.

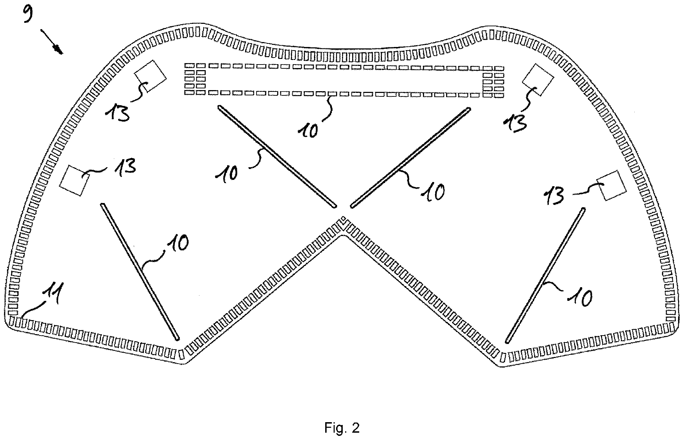

Zur Herstellung der Atemschutzmaske 1 wird aus dem Vliesstoffmaterial zunächst der in Figur 2 gezeigte Materialzuschnitt 9 hergestellt. Die einzelnen Lagen des Vliesstoffmaterials werden an geeigneten Stellen mittels Ultraschallschweißen miteinander verschweißt. Die Schweißnähte sind in den Figuren 2 und 1 mit dem Bezugszeichen 10 bezeichnet. Zur Formgebung der Maske wird der Zuschnitt entsprechend vernäht oder an den entsprechenden Stoßkanten nochmals verschweißt. Bei dem dargestellten Ausführungsbeispiel erfolgt die Herstellung mittels herkömmlicher Nähte 11. An geeigneten Befestigungspunkten 13 werden zudem zwei elastische Haltebänder 12 angebracht, welche die Maske am Kopf des Trägers fixieren. Im oberen Bereich der Nase ist zwischen den entsprechenden Schweißnähten 10 vorzugsweise ein anpassbarer Metallbügel eingearbeitet.

Der Lagenaufbau des erfindungsgemäßen Vliesstoffmaterials 2 ist in Figur 3 gezeigt. Es besteht aus einer dem Gesicht des Trägers der Maske abgewandten Außenlage 4, einer dem Gesicht zugewandten Innenlage 5, sowie einem zwischen Außenlage und Innenlage angeordneten Filtervlies zur Filterung der Atemluft. Die Innenlage 5 besteht erfindungsgemäß aus einem mittels Thermokalander beidseitig vollflächig glatt kalandrierten, faserbasierten Thermobondvlies aus Polypropylenfasern. Das Flächengewicht der Innenlage liegt im Bereich zwischen 15 und 20 g/qm, vorzugsweise bei 17 g/qm. Der Fasertiter der verwendeten Polypropylen-Stapelfasern liegt im Bereich zwischen 2 und 5 dtex.

Die Außenlage 4 ist ein mittels Thermokalander punktuell kalandriertes Polypropylen-Spinnvlies mit einem Flächengewicht von 30-50 g/qm. Vorzugsweise beträgt das Flächengewicht dabei 40 g/qm. Das Spinnvlies ist mittels Thermokalander verfestigt. Die Verfestigung der Außenlage erfolgt im Kalander lediglich punktuell nach einem wiederkehrenden Muster in Form von Punkten, Rauten, Ovalen oder Ähnlichem. Die Pressfläche im Thermokalander beträgt etwa 22% bis 30% der Gesamtfläche. Der Fasertiter der Polypropylenfasern der Außenlage liegt im Bereich zwischen 5 und 12 dtex.

Das Filtervlies 3 weist zwei Meltblownfilterlagen 6 und 7 sowie ein sogenanntes Abstandsvlies 8 auf, welches der Innenlage 5 zugewandt ist. Das Abstandvlies 8 ist ein voluminöses, mittels Thermokalander lediglich punktuell kalandriertes, faserbasiertes Thermobondvlies, das zu 50 Gewichtsprozent aus Polypropylen-Stapelfasern mit einem Fasertiter im Bereich zwischen 2 und 5 dtex sowie zu 50 Gewichtsprozent aus PET-Stapelfasern mit einem Fasertiter im Bereich zwischen 4 und 8 dtex besteht. Das Flächengewicht beträgt dabei etwa 50 g/qm. Die beiden Meltblownfilterlagen 6 und 7 dienen zur Feinfilterung und bestehen aus extrem dünnen Polypropylen-Feinstfasern. Das Flächengewicht beträgt dabei jeweils 22-28 g/qm.

Die Außenlage 4 weist eine Luftdurchlässigkeit von 2000 - 4500 l/m²/s auf. Die Meltblownfilterlagen 6 und 7 weisen jeweils eine Luftdurchlässigkeit von 350 - 450 l/m²/s auf. Das Abstandsvlies 8 weist eine Luftdurchlässigkeit von 3000 - 4800 l/m²/s auf. Und die Innenlage 5 weist eine Luftdurchlässigkeit von zumindest 3500 l/m²/s auf. Sämtliche vorgenannten Luftdurchlässigkeiten sind dabei nach WSP 70.1 bei einem Differenzdruck von 200 Pascal angegeben.

## Patentansprüche

1. Vliesstoffmaterial (2) zur Herstellung einer Atemschutzmaske (1), wobei das Vliesstoffmaterial eine dem Gesicht des Benutzers der Atemschutzmaske abgewandte Außenlage (4), eine dem Gesicht des Benutzers der Atemschutzmaske zugewandte Innenlage (5), sowie ein zwischen Außenlage und Innenlage angeordnetes Filtervlies (3) zur Filterung der Atemluft aufweist, **dadurch gekennzeichnet, dass** die Innenlage (5) ein mittels Thermokalander beidseitig vollflächig glatt kalandriertes, faserbasiertes Thermobondvlies aus Polypropylenfasern ist.

2. Vliesstoffmaterial (2) nach Anspruch 1, **dadurch gekennzeichnet, dass** die Innenlage (5) ein Flächengewicht von 15-20 g/qm, vorzugsweise von 16-18 g/qm, besonders bevorzugt von 17 g/qm aufweist.

3. Vliesstoffmaterial (2) nach Anspruch 1 oder 2, **dadurch gekennzeichnet, dass** die Innenlage (5) aus Stapelfasern besteht, deren Fasertiter im Bereich zwischen 2 und 5 dtex liegt.

4. Vliesstoffmaterial (2) nach einem der Ansprüche 1 bis 3, **dadurch gekennzeichnet, dass** das Filtervlies (3) eine der Außenlage (4) zugewandte erste Meltblownfilterlage (6), eine zweite Meltblownfilterlage (7), sowie ein der Innenlage (5) zugewandtes Abstandsvlies (8) aufweist, wobei das Abstandsvlies (8) ein kalandriertes, faserbasiertes Thermobondvlies aus Polypropylenfasern und Polyesterfasern ist, und wobei die Meltblownfilterlagen (6, 7) aus Polypropylen-Feinstfasern mit einem Faserdurchmesser zwischen 0,6 und 2,5 Mikrometer bestehen.

5. Vliesstoffmaterial (2) nach Anspruch 4, **dadurch gekennzeichnet, dass** das Abstandsvlies (8) ein Flächengewicht von 40-60 g/qm, vorzugsweise von 50 g/qm, aufweist und zu 40-60 Gewichtsprozent aus Polypropylen-Stapelfasern mit einem Fasertiter im Bereich zwischen 2 und 5 dtex sowie zu 40-60 Gewichtsprozent aus Polyesterstapelfasern mit einem Fasertiter im Bereich zwischen 4 und 8 dtex besteht.

6. Vliesstoffmaterial (2) nach Anspruch 4 oder 5, **dadurch gekennzeichnet, dass** die Meltblownfilterlagen (6, 7) ein Flächengewicht von 22-28 g/qm aufweisen.

7. Vliesstoffmaterial (2) nach einem der Ansprüche 4 bis 6, **dadurch gekennzeichnet, dass** die Außenlage (4) eine Luftdurchlässigkeit von 2000 - 4500 l/m²/s aufweist, wobei die Meltblownfilterlagen (6, 7) jeweils eine Luftdurchlässigkeit von 350 - 450 l/m²/s aufweisen, wobei das Abstandsvlies (8) eine Luftdurchlässigkeit von 3000 - 4800 l/m²/s aufweist, und wobei die Innenlage (5) eine Luftdurchlässigkeit von zumindest 3500 l/m²/s aufweist, wobei alle vorgenannten Luftdurchlässigkeiten nach WSP 70.1 bei einem Differenzdruck von 200 Pascal angegeben sind.

8. Vliesstoffmaterial (2) nach einem der Ansprüche 1 bis 6, **dadurch gekennzeichnet, dass** die Außenlage (4) ein mittels Thermokalander punktuell kalandriertes Polypropylen-Spinnvlies mit einem Flächengewicht von 30-50 g/qm, vorzugsweise 40 g/qm, ist.

9. Atemschutzmaske (1), **dadurch gekennzeichnet, dass** die Atemschutzmaske aus einem Vliesstoffmaterial (2) gemäß einem der Ansprüche 1 bis 8 hergestellt ist.

10. Atemschutzmaske (1) nach Anspruch 9, **dadurch gekennzeichnet, dass** die Atemschutzmaske (1) als Schnabelmaske ausgeführt ist.

## Claims

1. A nonwoven material (2) for manufacturing a respiratory mask (1), wherein the nonwoven material has an outer layer (4) facing away from the face of the user of the respiratory mask, an inner layer (5) facing the face of the user of the respiratory mask, and a fleece filter (3) arranged between the outer layer and the inner layer for filtering the breathing air, **characterized in that** the inner layer ( 5) is a fiber-based thermobond fleece made of polypropylene fibers, which has been calendered over its entire surface on both sides by means of a thermocalender.

2. The nonwoven material (2) according to claim 1,
**characterized in that** the inner layer (5) has a basis weight of 15-20 g/m2, preferably of 16-18 g/m2, particularly preferably of 17 g/m2.

3. The nonwoven material (2) according to claim 1 or 2,
**characterized in that** the inner layer (5) consists of staple fibres whose fibre titer is in the range between 2 and 5 dtex.

4. The nonwoven material (2) according to one of claims 1 to 3,
**characterized in that** the fleece filter (3) has a first melt-blown filter layer (6) facing the outer layer (4), a second melt-blown filter layer (7), and a spacer fleece (8) facing the inner layer (5), wherein the spacer fleece (8) is a calendered, fiber-based thermobond fleece made of polypropylene fibers and polyester fibers, and wherein the meltblown filter layers (6, 7) consist of polypropylene ultrafine fibers having a fiber diameter between 0.6 and 2.5 micrometers.

5. The nonwoven material (2) according to claim 4,
**characterized in that** the spacer fleece (8) has a basis weight of 40-60 g/m2, preferably 50 g/m2, and consists of 40-60 percent by weight of polypropylene staple fibers having a fiber titer in the range between 2 and 5 dtex and 40-60 percent by weight of polyester staple fibers having a fiber titer in the range between 4 and 8 dtex.

6. The nonwoven material (2) according to claim 4 or 5,
**characterized in that** the meltblown filter layers (6, 7) have a basis weight of 22-28 g/m2.

7. The nonwoven material (2) according to one of claims 4 to 6,
**characterized in that** the outer layer (4) has an air permeability of 2000-4500 l/m²/s, wherein the meltblown filter layers (6, 7) each have an air permeability of 350-450 l/m²/s, wherein the spacer fleece (8) has an air permeability of 3000-4800 l/m²/s, and the inner layer (5) has an air permeability of at least 3500 l/m²/s, wherein all the above-mentioned air permeabilities are specified according to WSP 70.1 at a differential pressure of 200 pascal.

8. The nonwoven material (2) according to one of claims 1 to 6,
**characterized in that** the outer layer (4) is a polypropylene spunbonded fabric, which is calendered pointwise by means of a thermocalender, having a basis weight of 30-50 g/m2, preferably 40 g/m2.

9. A respiratory mask (1), **characterized in that** the respiratory mask is made of a nonwoven material (2) according to any one of claims 1 to 8.

10. The respiratory mask (1) according to claim 9,
**characterized in that** the respiratory mask (1) is designed as a beak-shaped mask.

## Revendications

1. Matériau non tissé (2) pour la fabrication d'un masque de protection respiratoire (1), dans lequel le matériau non tissé comprend une couche externe (4) du côté opposé au visage de l'utilisateur du masque de protection respiratoire, une couche interne (5) du côté du visage de l'utilisateur du masque de protection respiratoire, ainsi qu'un non-tissé filtrant (3) agencé entre la couche externe et la couche interne pour filtrer l'air respirable, **caractérisé en ce que** la couche interne (5) est un non-tissé thermolié à base de fibres de polypropylène, qui est entièrement lissé par calandrage des deux côtés au moyen d'une thermocalandreuse.

2. Matériau non tissé (2) selon la revendication 1, **caractérisé en ce que** la couche interne (5) présente un grammage de 15 à 20 g/m², de préférence de 16 à 18 g/m², et de manière particulièrement préférée de 17 g/m².

3. Matériau non tissé (2) selon la revendication 1 ou 2, **caractérisé en ce que** la couche interne (5) est constituée de fibres discontinues dont le titre de fibre est compris entre 2 et 5 dtex.

4. Matériau non tissé (2) selon l'une des revendications 1 à 3, **caractérisé en ce que** le non-tissé filtrant (3) comprend une première couche filtrante obtenue par fusion-soufflage (6) du côté de la couche externe (4), une deuxième couche filtrante obtenue par fusion-soufflage (7), ainsi qu'un non-tissé d'espacement (8) du côté de la couche interne (5), dans lequel le non-tissé d'espacement (8) est un non-tissé thermolié calandré à base de fibres de polypropylène et de polyester, et dans lequel les couches filtrantes obtenues par fusion-soufflage (6, 7) sont constituées de fibres ultrafines de polypropylène ayant un diamètre de fibre compris entre 0,6 et 2,5 micromètres.

5. Matériau non tissé (2) selon la revendication 4, **caractérisé en ce que** le non-tissé d'espacement (8) présente un grammage de 40 à 60 g/m², de préférence de 50 g/m², et est constitué de 40 à 60 % en masse de fibres discontinues de polypropylène avec un titre de fibre compris dans une plage de 2 à 5 dtex, ainsi que de 40 à 60 % en masse de fibres discontinues de polyester avec un titre de fibre compris dans une plage de 4 à 8 dtex.

6. Matériau non tissé (2) selon la revendication 4 ou 5, **caractérisé en ce que** les couches filtrantes obtenues par fusion-soufflage (6, 7) présentent un grammage de 22 à 28 g/m².

7. Matériau non tissé (2) selon l'une des revendications 4 à 6, **caractérisé en ce que** la couche externe (4) présente une perméabilité à l'air de 2.000 à 4.500 l/m²/s, dans lequel les couches filtrantes obtenues par fusion-soufflage (6, 7) présentent chacune une perméabilité à l'air de 350 à 450 1/m²/s, dans lequel le non-tissé d'espacement (8) présente une perméabilité à l'air de 3.000 à 4.800 1/m²/s, et dans lequel la couche interne (5) présente une perméabilité à l'air d'au moins 3.500 1/m²/s, dans lequel toutes les perméabilités à l'air susmentionnées répondent à la norme WSP 70.1 à une pression différentielle de 200 Pa.

8. Matériau non tissé (2) selon l'une des revendications 1 à 6, **caractérisé en ce que** la couche externe (4) est un non-tissé filé-lié de polypropylène calandré ponctuellement au moyen d'une thermocalendreuse, présentant un grammage de 30 à 50 g/m², de préférence de 40 g/m².

9. Masque de protection respiratoire (1), **caractérisé en ce que** le masque de protection respiratoire est fabriqué en un matériau non tissé (2) selon l'une des revendications 1 à 8.

10. Masque de protection respiratoire (1) selon la revendication 9, **caractérisé en ce que** le masque de protection respiratoire (1) est réalisé comme un masque à bec.
